# EUROPÄISCHE PATENTSCHRIFT

(11) **EP 3 224 097 B1**
(45) Veröffentlichungstag und Bekanntmachung des Hinweises auf die Patenterteilung: **23.01.2019**
(21) Anmeldenummer: 16745103.8
(22) Anmeldetag: 28.07.2016
(51) Int. Cl.: B60S 9/12

(54) **LANDFAHRZEUG MIT EINEM CHASSIS UND EINER MEHRZAHL VON DARAN ANGEBRACHTEN ECKSTÜTZEINHEITEN**
LAND VEHICLE HAVING A CHASSIS AND A PLURALITY OF ATTACHED CORNER SUPPORT UNITS
VÉHICULE TERRESTRE MUNI D'UN CHÂSSIS ET D'UNE PLURALITÉ DE MONTANTS D'ANGLES MONTÉS SUR LE CHÂSSIS

(30) Priorität: 28.07.2015 DE 102015112321
(43) Veröffentlichungstag der Anmeldung: 04.10.2017
(73) Patentinhaber: Hoerbiger Automatisierungstechnik Holding GmbH, 86972 Altenstadt (DE)
(72) Erfinder: ROIDER, Peter, 93138 Lappersdorf (DE)
(74) Vertreter: Grättinger Möhring von Poschinger Patentanwälte Partnerschaft
(86) Internationale Anmeldenummer: PCT/EP2016/068035
(87) Internationale Veröffentlichungsnummer: WO 2017/017204

(56) Entgegenhaltungen:
- EP-A1- 2 418 131
- DE-A1-102010 020 452
- US-A- 4 235 542

## Beschreibung

Die vorliegende Erfindung betrifft ein Landfahrzeug mit einem Chassis und einer Mehrzahl von daran angebrachten Eckstützeinheiten.

Für verschiedene Landfahrzeuge ist es wichtig, dass sie sich im (auf einem Untergrund) abgestellten Zustand nivellieren und in der nivellierten Stellung stabilisieren lassen. Dies gilt insbesondere für Campingfahrzeuge, namentlich für Wohnwagen. Zu diesem Zweck sind an den betreffenden Landfahrzeugen mehrere Eckstützeinheiten vorgesehen, welche jeweils ein auf den Untergrund absenkbares Stützbein umfassen.

Solche Eckstützeinheiten sind in verschiedenen Bauweisen bekannt. Zu unterscheiden ist dabei insbesondere dahingehend, ob ein Stützbein mit fest vorgegebener Länge zum Einsatz kommt (z.B. DE 7806499 U, US 6089603 A, EP 163544 A, GB 2109322 A) oder aber ein längenveränderliches Stützbein. Im zuletzt genannten Fall können die Stützbeine insbesondere mehrere - im Sinne eines Teleskops - bezüglich einander (z.B. hydraulisch) längsverschiebbare Elemente oder aber mehrere - im Sinne eines Scherenwagenhebers (vgl. US 4784400 A) - gelenkig miteinander verbundene Glieder umfassen, wobei das betreffende längenveränderbare Stützbein zudem ggf. (zwischen einer Betriebsstellung und einer Verstaustellung) um eine im Wesentlichen horizontale Achse verschwenkbar gelagert sein kann. Insoweit ist zum Stand der Technik beispielhaft zu verweisen auf die WO 2007/023347 A1, US 4174094 A, US 6619693 B1, US 2004/0046337 A1, EP 1000828 A1, US 5013011 A und US 4061309 A. Bei Eckstützeinheiten mit einem Stützbein, welches eine fest vorgegebene Länge aufweist, ist das Stützbein regelmäßig um eine im Wesentlichen horizontale Achse verschwenkbar gelagert. Um das Landfahrzeug auf dem Untergrund abzustützen, wird das Stützbein in diesem Falle aus seiner angehobenen Verstaustellung in seine abgesenkte Betriebsstellung verschwenkt, bis es mit einem an seinem Ende (ggf. gelenkig) angeordneten Fuß auf dem Untergrund aufsetzt und das Landfahrzeug - in Verbindung mit dessen weiteren Eckstützeinheiten - nivelliert und in der nivellierten Stellung stabilisiert.

Angesichts der teilweisen Konkurrenz der Anforderungen (z. B. hohe Leistungsfähigkeit, großer Arbeitsbereich, geringes Baumaß bzw. geringe Abmessungen, Robustheit, hohe Zuverlässigkeit, niedrige Herstellungskosten, mögliche Nachrüstbarkeit, etc.), wie sie in der Praxis an die hier in Rede stehenden Eckstützeinheiten selbst und deren Integration in die Fahrzeugumgebung gestellt werden, erweist sich - wofür auch die große Zahl an Ansätzen (s. o.) als Indiz gewertet werden kann - als schwierig, eine in jeder Hinsicht zufriedenstellende Lösung zu konzipieren.

Die DE 10 2010 020 452 A1 offenbart ein Landfahrzeug nach dem Oberbegriff des Anspruchs 1.

Ziel der vorliegenden Erfindung ist es, zu einer Verbesserung der Funktionsfähigkeit von eingangs angegebenen Landfahrzeugen mit Eckstützeinheiten beizutragen. Insbesondere soll ein solches Landfahrzeug bereitgestellt werden, dessen der Fahrzeug-Nivellierung und -Stabilisierung in der nivellierten Stellung dienendes, eine Mehrzahl von Eckstützeinheiten umfassendes Nivelliersystem den durch die Praxis gestellten Anforderungen in der Summe in einem größtmöglichen Maß genügt.

Gelöst wird diese Aufgabenstellung durch das in Anspruch 1 angegebene Landfahrzeug. Eines der Kernmerkmale der vorliegenden, die vorstehende Aufgabenstellung lösenden Erfindung ist demnach, dass jede der Eckstützeinheiten ein Stützbein aufweist, das - um eine im Wesentlichen horizontale Achse schwenkbar - in einem starr an dem Landfahrzeug angebrachten Lagerschuh gelenkig gelagert und dessen Länge teleskopisch veränderbar ist. Das jeweilige Stützbein umfasst dabei mindestens zwei in Längsrichtung des Stützbeines relativ zueinander verschiebbare Rohrabschnitte, wobei im Inneren des Stützbeines ein Hydraulikzylinder angeordnet ist. Mittels des besagten Hydraulikzylinders lässt sich die relative Position der mindestens zwei Rohrabschnitte zueinander (und somit die Länge des Stützbeins) verändern. Der Hydraulikzylinder kann somit auch als Hubzylinder bezeichnet werden; denn mit ihm wird - entsprechend dem möglichen Hub - der endseitig am Stützbein angeordnete Stützfuß ein- und ausgefahren. Entscheidend ist dabei, dass eine kraftübertragende Führung der mindestens zwei Rohrabschnitte des Stützbeins zueinander (beispielsweise mittels geeigneter Gleitführungen) vorgesehen ist, so dass eine Übertragung von quer zur Längsachse des betreffenden Stützbeines gerichteten Kraftkomponenten direkt von einem Rohrabschnitt zum anderen Rohrabschnitt erfolgt. Auf den im Inneren des Stützbeines angeordneten (gesonderten) Hydraulikzylinder wirken demgemäß keinerlei Querkräfte. Vielmehr wird der Hydraulikzylinder im Betrieb der jeweiligen Eckstützeinheit ausschließlich in seiner Längsrichtung, d. h. in axialer Richtung des Stützbeines belastet. Es erfolgt somit, mit anderen Worten, insbesondere beim Aufsetzen des Stützbeines auf den Untergrund eine Entkoppelung jenes Anteils der in den Stützfuß eingeleiteten Kraft, welcher in Längsrichtung des Stützbeins orientiert ist, einerseits und jenes - beispielsweise aufgrund des Aufsetzens des Stützbeines auf einem unebenen Untergrund sich einstellenden - Anteils der auf den Stützfuß wirkenden Kraft, welcher quer zur Längsrichtung des Stützbeins orientiert ist. Der zuletzt genannte Anteil wird von dem Stützfuß über die mindestens zwei Rohrabschnitte und die Lagerung des Stützbeines (s. u.) direkt in das Landfahrzeug eingeleitet.

Weiterhin ist für das erfindungsgemäße Landfahrzeug charakteristisch, dass das erfindungsgemäße Landfahrzeug über mehrere Hydraulikaggregate verfügt, indem jeder einzelnen Eckstützeinheit ein eigenes Hydraulikaggregat zugeordnet ist, welches allein der Beaufschlagung des im Inneren des Stützbeins dieser Eckstütze angeordneten Hydraulikzylinders (sowie eines ggf. vorgesehenen zusätzlichen Verschwenkzylinders; s. u.) dient. Bevorzugt ist dabei eine zentrale Steuer- und Regeleinheit vorgesehen, welche die Hydraulikaggregate - in Abhängigkeit von einem Lagesensor, welcher die Lage des Fahrzeugs erfasst - in dem Sinne steuert, dass das Landfahrzeug die vorgesehene horizontale Lage einnimmt und beibehält. Mit besonderem Vorteil sind dabei die dezentral vorgesehenen Hydraulikaggregate in einer mechanisch geschützten Position an den starr am Landfahrzeug angebrachten Lagerschuhen für die Stützbeine angeordnet. In Umsetzung der Erfindung werden zwar nicht zwingend (s. u.), aber doch in aller Regel flexible Hydraulikleitungen vorzusehen sein, diese allerdings von nur geringer Länge und in einer vergleichsweise geschützten Anordnung, so dass die Gefahr beschädigter Hydraulikleitungen gering ist.

Die mindestens zwei Rohrabschnitte jedes Stützbeins können dabei kreisförmige Querschnitte aufweisen. Als besonders günstig können sich allerdings polygonale Querschnitte erweisen, beispielsweise indem die Rohrabschnitte in Form von Quadrat- oder Rechteckrohren ausgeführt sind.

Das erfindungsgemäße Landfahrzeug kann in bevorzugter Weise durch die nachstehend dargelegten Merkmale und technischen Gesichtspunkte - einzeln oder aber in Kombination miteinander - weitergebildet werden.

Im Rahmen der vorliegenden Erfindung lässt sich das jeweilige Stützbein typischerweise aus einer hochgeschwenkten (z. B. mehr oder weniger horizontalen) Ruhe- oder Verstaustellung heraus in eine im Wesentlichen vertikale Betriebsstellung verschwenken. Für das besagte Verschwenken des Stützbeins kann ein speziell diesem Zweck dienender Schwenkantrieb vorgesehen sein, beispielsweise ein Hydraulikzylinder, welcher einerseits an dem Lagerschuh und andererseits insbesondere an dem in diesem gelenkig gelagerten Rohrabschnitt des Stützbeins angelenkt ist. Andere dem Fachmann geläufige Verschwenkantriebe (z. B. in Form eines Elektromotors) kommen ebenfalls in Betracht.

Gemäß einer anderen bevorzugten Weiterbildung ist kein gesonderter Verschwenkantrieb vorgesehen, sondern bewirkt vielmehr der in dem Stützbein angeordnete Hydraulikzylinder nicht nur die teleskopische Längenveränderung des Stützbeins, sondern vielmehr auch dessen Verschwenkung. Dies kann insbesondere unter Verwendung einer Kulissenführung geschehen, welche die Längenveränderung des Stützbeins und dessen Verschwenken mechanisch miteinander koppelt. In diesem Sinne kann beispielsweise bei einer Eckstütze, deren Stützbein zwei Rohrabschnitte umfasst, mit dem inneren Rohrabschnitt mindestens ein seitlich abstehender Rollenbolzen verbunden sein, welcher (z. B. durch ein Langloch hindurch) durch den äußeren Rohrabschnitt hindurch tritt und in eine an dem Lagerschuh angeordnete Kulisse hinein ragt. Die Geometrie der Kulisse kann dabei insbesondere so gewählt sein, dass beim Ausfahren des Stützbeins zu dessen Beginn bei einem vergleichsweise geringen Anteil des Hubes die Schwenkbewegung des Stützbeins aus der Verstaustellung in die Betriebsstellung hinein erfolgt, während bei dem anschließenden überwiegenden Anteil des Hubes der Stützfuß abgesenkt wird, ohne dass sich die Orientierung der Achse noch verändert.

In abermals anderer bevorzugter Weiterbildung ist der - endseitig an dem Stützbein angeordnete - Stützfuß an dem zugeordneten äußersten Rohrabschnitt (zumindest in Längsrichtung des Stützbeins) federnd gelagert. Der Stützfuß kann somit relativ zu dem äußersten Rohrabschnitt des Stützbeins um ein gewisses Maß einfedern. Dies erweist sich als besonders vorteilhaft im Hinblick auf die Standsicherheit und Lagesicherung des Landfahrzeugs auf einem mehr oder weniger nachgiebigen Untergrund; denn im Umfang des Federweges des Stützfußes relativ zum zugeordneten Rohrabschnitt des Stützbeins behalten auch bei einem Nachgeben des Untergrunds sämtliche Eckstützeinheiten Bodenkontakt. Im Übrigen ist für die Standsicherheit günstig, wenn der Stützfuß in Form eines kardanisch zu dem Stützbein gelenkigen Tellers ausgeführt ist.

Bei verschwenkbaren Stützbeinen (s. o.) können ergänzend Mittel vorgesehen sein, mittels derer das in seine Ruhe-bzw. Verstauposition verschwenkte Stützbein gesichert wird. Hierzu können insbesondere mechanische Mittel (z. B. Klammern) dienen oder aber auch magnetisch wirkende Mittel. Insbesondere können die betreffenden Mittel zur Sicherung des Stützbeins in seiner Ruheposition an dem äußersten, den Stützfuß tragenden Rohrabschnitt angreifen. Dies gestattet, dass die Mittel auf einfache Weise außer Eingriff gebracht werden, indem das Stützbein - unter Einsatz des in ihm angeordneten Hydraulikzylinders - teleskopisch verlängert wird.

In abermals anderer bevorzugter Weiterbildung kann ein externer hydraulischer Druckspeicher vorgesehen sein, welcher im regulären Betrieb unter Druck gehalten wird. Über ein manuell betätigbares Notventil lässt sich der Druckspeicher mit einer Ventilgruppe verbinden, so dass im Notfall sämtliche Eckstützen - unter Nutzung der in dem hydraulischen Druckspeicher gespeicherten hydraulischen Energie - mindestens noch ein Mal ein- und/oder ausgefahren werden können.

In der anliegenden Zeichnung sind mittels verschiedener bevorzugter Ausgestaltungen maßgebliche, vorstehend erläuterte technische Gesichtspunkte, Merkmale und Aspekte anhand geeigneter Konkretisierungen veranschaulicht. Dass die vorliegende Erfindung, wie sie weiter oben erläutert ist, nicht auf die Ausführungsbeispiele gemäß den Figuren beschränkt ist, versteht sich von selbst, wird aber gleichwohl nochmals ausdrücklich betont.

In der Zeichnung zeigt
- Fig. 1: in schematischer perspektivischer Ansicht ein mit vier an seinem Chassis angebrachten Eckstützeinheiten ausgestattetes Landfahrzeug,
- Fig. 2: in einem vertikalen Schnitt ein erstes Ausführungsbeispiel einer im Rahmen der vorliegenden Erfindung einsetzbaren Eckstützeinheit,
- Fig. 3: in perspektivischer Ansicht ein zweites Ausführungsbeispiel einer im Rahmen der vorliegenden Erfindung einsetzbaren Eckstützeinheit,
- Fig. 4: in Seitenansicht ein drittes Ausführungsbeispiel einer im Rahmen der vorliegenden Erfindung einsetzbaren Eckstützeinheit mit in seine Betriebsstellung verschwenkten Stützbein,
- Fig. 5: in einem Teilausschnitt die Eckstützeinheit nach Fig. 4 mit in seine Verstaustellung verschwenkten Stützbein,
- Fig. 6: in Seitenansicht ein viertes Ausführungsbeispiel einer im Rahmen der vorliegenden Erfindung einsetzbaren Eckstützeinheit mit in seine Verstaustellung verschwenkten Stützbein und
- Fig. 7: die Eckstützeinheit nach Fig. 6 mit in seine Betriebsstellung verschwenktem, auf seine maximale Länge ausgefahrenem Stützbein.

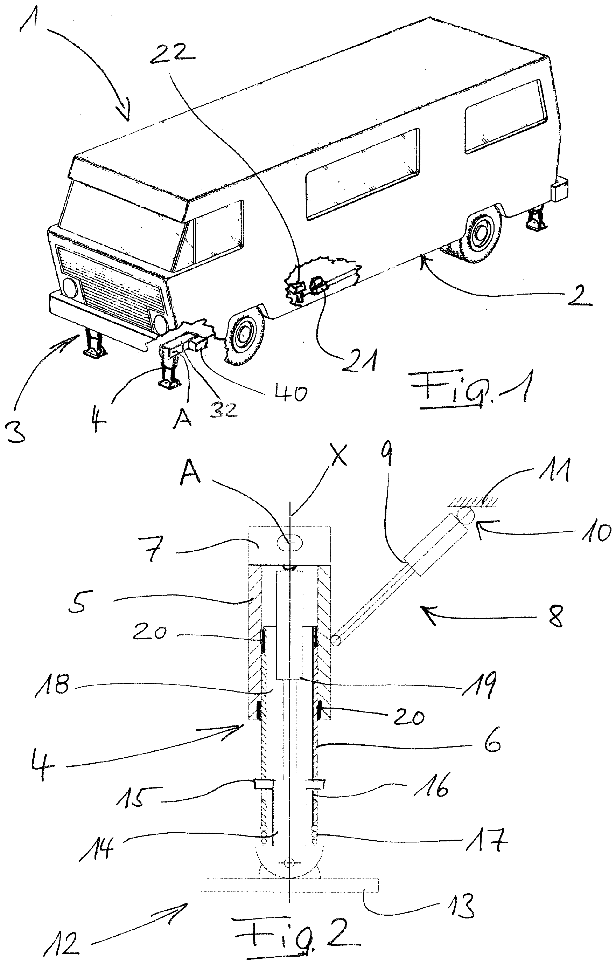

Nach Fig. 1 umfasst das - in Form eines Wohnmobils ausgeführte - Landfahrzeug 1 ein Chassis 2. An diesem sind vier Eckstützeinheiten 3 angebracht. Jede der vier Eckstützeinheiten 3 weist ein Stützbein 4 auf, dessen Länge teleskopisch veränderbar ist. Da das in der Zeichnung veranschaulichte Landfahrzeug insoweit dem hinlänglich bekannten Stand der Technik entspricht, sind weitere Erläuterungen entbehrlich.

Bei jeder Eckstützeinheit 3 ist das Stützbein 4, wie dies schematisch veranschaulicht ist, in einem starr mit dem Chassis 2 des Landfahrzeugs 1 verbundenen Lagerschuh 32 um eine horizontale Achse A schwenkbar gelagert. An dem Lagerschuh ist jeweils ein der jeweiligen Eckstützeinheit 3 zugeordnetes dezentrales Hydraulikaggregat 40 angeordnet.

Gemäß der in Fig. 2 veranschaulichten Ausgestaltung umfasst das Stützbein 4 der Eckstützeinheit 3 zwei in Längsrichtung X des Stützbeines relativ zueinander verschiebbare Rohrabschnitte, nämlich einen äußeren Rohrabschnitt 5 und einen inneren Rohrabschnitt 6. Mit dem äußeren Rohrabschnitt 5 ist ein das Stützbein 3 nach oben abschließendes Kopfteil 7 verbunden, an dem das Stützbein - zwischen einer hochgeschwenkten Verstaustellung und der in Fig. 2 gezeigten im Wesentlichen vertikalen Betriebsstellung - um eine horizontale Achse A verschwenkbar gelagert ist. Um das Stützbein 3 zu verschwenken ist ein Verschwenkantrieb 8 mit einem an dem äußeren Rohrabschnitt 5 angreifenden Hydraulikzylinder 9 vorgesehen, dessen anderes Ende 10 sich an einem chassisfesten Gegenlager 11 abstützt.

An dem unteren Ende des inneren Rohrabschnitts 6 des Stützbeins 4 ist ein Stützfuß 12 vorgesehen. Dieser umfasst einen Teller 13, der an einem Tragteil 14 schwenkbar gelagert ist. Das Tragteil 14 ist in dem inneren Rohrabschnitt 6 in Längsrichtung X des Stützbeins 4 verschiebbar, wobei der maximale Verschiebeweg durch Zusammenwirken eines an dem Tragteil 14 angeordneten Querbolzens 15 mit zwei an dem inneren Rohrabschnitt 6 ausgeführten Langlöchern 16 definiert ist. Der Stützfuß 12 ist dabei dergestalt federnd an dem Stützbein 4 gelagert, dass sich zwischen der Stirnseite des inneren Rohrabschnitts 6 des Stützbeins 4 und dem Tragteil 14 des Stützfußes 12 eine Schraubenfeder 17 erstreckt. So kann der Stützfuß 12 entsprechend seiner Belastung einfedern.

Im Inneren des Stützbeines 4, d. h. in dem durch den äußeren Rohrabschnitt 5 und den inneren Rohrabschnitt 6 begrenzten Hohlraum 18, ist ein Hydraulikzylinder 19 angeordnet. Mit diesem lässt sich die relative Position der mindestens zwei Rohrabschnitte 5 und 6 zueinander und somit die Länge des Stützbeins 4 verändern. Die beiden Rohrabschnitte 5 und 6 sind mittels Gleitlagerstücken 20 reibungsarm gleitend relativ zueinander geführt, wobei die unteren Gleitlagerstücke 20 überdies ein Eindringen von Schmutz in das Innere des Stützbeins 4 verhindern.

Die beiden Hydraulikzylinder 9 und 19 jeder Eckstützeinheit 3 werden jeweils durch das dieser zugeordnete dezentrale Hydraulikaggregat 40 (s. o.) beaufschlagt. Die Ansteuerung der vier dezentralen Hydraulikaggregate erfolgt durch eine zentrale, eine Nivelliersteuerung umfassende Steuer- und Regeleinheit 21 in Abhängigkeit von einem Lagesensor 22, welcher die Lage des Fahrzeugs erfasst, dergestalt, dass das Landfahrzeug die vorgesehene horizontale Lage einnimmt und beibehält (vgl. Fig. 1).

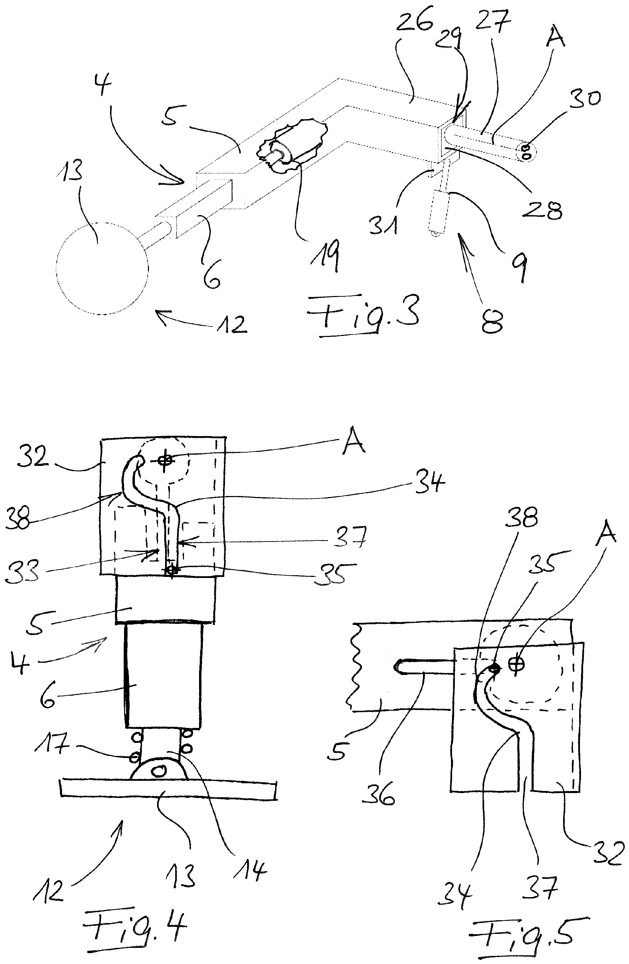

Das in Fig. 3 gezeigte Ausführungsbeispiel einer im Rahmen der vorliegenden Erfindung einsetzbaren Eckstützeneinheit entspricht weitgehend demjenigen nach Fig. 2. Hervorzuheben ist hier allerdings die abweichende Ausführung der - um die Achse A verschwenkbaren - Lagerung des Stützbeins 4. Und zwar weist der äußere Rohrabschnitt 5 hier einen seitlichen Ansatz 26 auf, in dem eine auf einer (feststehenden) Nabe 27 drehbare Lagerbuchse 28 aufgenommen ist. In Kombination miteinander können die Nabe 27 und die Lagerbuchse 28 eine hydraulische Drehkupplung 29 bereitstellen. Hierzu münden zwei in der Nabe 27 ausgeführte, an das Hydrauliksystem angeschlossenen Hydraulikkanäle 30 in jeweils einer auf der Oberfläche der Nabe 27 ausgeführten Umfangsnut. In der Lagerbuchse 28 sind ebenfalls zwei Hydraulikkanäle ausgeführt. Diese münden fluchtend zu den beiden auf der Nabe 27 ausgeführten Umfangsnuten, so dass sie mit diesen kommunizieren, und sind an den im Inneren des Stützbeins 4 angeordneten Hydraulikzylinder 19 angeschlossen.

Weiterhin greift - im Hinblick auf die spezifische Einbausituation - bei dem Ausführungsbeispiel nach Fig. 3 der Hydraulikzylinder 9 des Verschwenkantriebs 8 nicht an dem äußeren Rohrabschnitt 5 des Stützbeins 4 an, sondern vielmehr an einer mit dem seitlichen Ansatz 26 verbundenen Lasche 31. Im Übrigen erklärt sich das Ausführungsbeispiel nach Fig. 3 unmittelbar durch die vorstehenden Erläuterungen zu Fig. 2. Gut erkennbar ist hier allerdings die Ausführung des äußeren Rohrabschnitts 5 und des inneren Rohrabschnitts 6 des Stützbeins 4 jeweils mit einem polygonalen, nämlich vorliegend einem quadratischen Querschnitt. Weitergehende Ausführungen erübrigen sich.

Bei der in den Figuren 4 und 5 gezeigten Ausführungsform einer im Rahmen der vorliegenden Erfindung einsetzbaren Eckstützeinheit 3 ist der starr an dem Chassis 2 des betreffenden Landfahrzeugs 1 anbringbare Lagerschuh 32 gezeigt, in dem das Stützbein 4 um die horizontale Achse A verschwenkbar gelagert ist. Hier erfolgt, anders als bei den bisher erläuterten Ausführungsbeispielen, das Verschwenken des Stützbeins 4 nicht mittels eines gesonderten Verschwenkantriebs 8. Vielmehr sind die Längenveränderung des Stützbeins 4 und dessen Verschwenken mechanisch miteinander koppelt. Hierzu ist eine Kulissenführung 33 mit einer in dem Lagerschuh 32 angeordneten Kulisse 34 vorgesehen. In diese greift ein Rollenbolzen 35 ein, der mit dem inneren Rohrabschnitt 6 verbunden ist und - in einem achsparallelen Langloch 36 - durch den äußeren Rohrabschnitt 5 hindurch tritt. Die Geometrie der Kulisse 34 ist dabei so ausgeführt, dass beim Verkürzen des Stützbeins 4 durch Einfahren des inneren Rohrabschnitts 6 in den äußeren Rohrabschnitt 5 zunächst (infolge des ersten geraden achsparallelen Abschnitts 37 des Kulisse 34) keinerlei Verschwenken des Stützbeins 4 erfolgt, sondern das Stützbein 4 vielmehr (infolge des zweiten spiralförmigen Abschnitts 38 der Kulisse 34) erst im zweiten Teil seiner Verkürzung aus der Betriebsstellung (Fig. 4) in die Verstaustellung (Fig. 5) verschwenkt wird. Umgekehrt erfolgt somit beim Ausfahren des inneren Rohrabschnitts 6 des Stützbeins 4, um dieses zu verlängern, die Schwenkbewegung des Stützbeins 4 aus der Verstaustellung in die Betriebsstellung zum Beginn des Ausfahrens des inneren Rohrabschnitts 6 bereits bei einem vergleichsweise geringen Anteil des Hubes.

Im Übrigen erklärt sich das Ausführungsbeispiel nach den Figuren 4 und 5 aus den vorstehenden Erläuterungen der zuvor beschriebenen Ausführungsbeispiele, so dass es weiterer Ausführungen nicht bedarf.

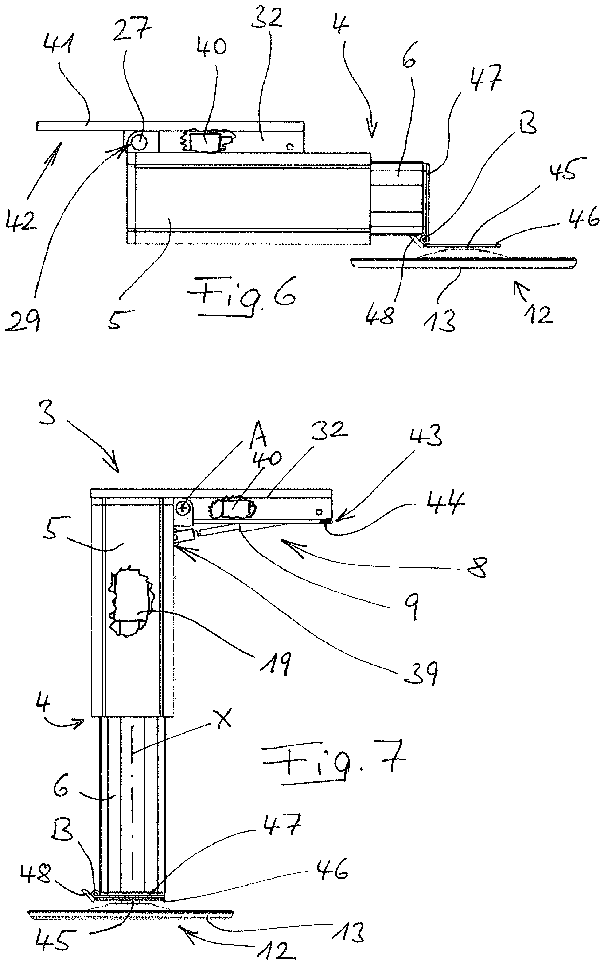

Das Ausführungsbeispiel nach den Figuren 6 und 7 unterscheidet sich von den vorstehend beschriebenen Ausführungsbeispielen insbesondere wie folgt: Hier ist der an dem Chassis 2 des Landfahrzeugs 1 anbringbare Lagerschuh 32 so dimensioniert, dass sich der Hydraulikzylinder 9 des Verschwenkantriebs 8 mit seinem dem Anlenkpunkt 39 am äußeren Rohrabschnitt 5 gegenüberliegenden Ende an ihm abstützt. Durch die auf die Dimensionen des äußeren Rohrabschnitts 5 des Stützbeins 4 abgestimmten Abmessungen des Lagerschuhs 32 entsteht im Übrigen ein für die Aufnahme des dezentralen, nur die betreffende Eckstückeinheit versorgenden Hydraulikaggregats 40 geeigneter Raum. Dieser Raum wird durch das Stützbein 4 in dessen Verstaustellung (Fig. 6) nach unten verschlossen, so dass das Hydraulikaggregat 40 dann, wenn das Landfahrzeug bewegt wird, besonders geschützt ist, ebenso wie der Hydraulikzylinder 9 des Verschenkantriebs 8. Die Versorgung des im Inneren des Stützbeins angeordneten (doppeltwirkenden) Hydraulikzylinders 19 aus dem Hydraulikaggregat 40 erfolgt hier schlauchlos, indem im Bereich der Schwenkachse A eine unter anderem die Nabe 27 umfassende Hydraulik-Drehkupplung 29 vorgesehen ist.

Der Lagerschuh 32 weist einen als Anschlagplatte 41 ausgeführten Ansatz 42 auf, an der sich das Stützbein 4 in der Betriebsstellung (Fig. 7) mit seinem Kopfteil 7 abstützt. Weiterhin sind an dem Lagerschuh 32 der Lagesicherung des Stützbeins 4 in seiner Verstaustellung dienende Sicherungsmittel 43 in Form eines Schnappers 44 vorgesehen, der mit einer korrespondierenden Raste des äußeren Rohrabschnitts 5 des Stützbeins 4 zusammenwirkt.

Der Teller 13 des Stützfußes 12 ist bei diesem Ausführungsbeispiel an dem Gelenkpunkt 45 an einer Zwischenplatte 46 (um ein begrenztes Maß) in sämtliche Richtungen verschwenkbar, d. h. kardanisch gelagert. Die Zwischenplatte 46 ist ihrerseits an dem unteren Abschlussteil 47 des Stützbeins 4 außermittig verschwenkbar gelagert, wobei sich die entsprechende Schwenkachse B parallel erstreckt zur Schwenkachse A des Stützbeins 4. Hierdurch nimmt der Teller 13 des Stützfußes 12 bei angehobenem, in seine Verstaustellung verschwenktem Stützbein 4 (Fig. 6) selbsttätig eine flache, durch den Anschlag 48 definierte Fahrstellung ein.

## Patentansprüche

1. Landfahrzeug (1) mit einem Chassis (2) und einer Mehrzahl von daran angebrachten Eckstützeinheiten (3), mit den folgenden Merkmalen:
jede der Eckstützeinheiten (3) weist ein Stützbein (4) auf, das in einem starr an dem Landfahrzeug (1) angebrachten Lagerschuh (32) um eine im Wesentlichen horizontale Achse (A) verschwenkbar gelagert ist;
die Länge des Stützbeins (4) ist teleskopisch veränderbar;
das Stützbein (4) umfasst mindestens zwei in Längsrichtung (X) des Stützbeines relativ zueinander verschiebbare Rohrabschnitte (5, 6);
im Inneren des Stützbeines (4) ist ein Hydraulikzylinder (19) angeordnet, mittels dessen sich die relative Position der mindestens zwei Rohrabschnitte (5, 6) zueinander und somit die Länge des Stützbeins (4) verändern lässt; **dadurch gekennzeichnet, dass**
jeder Eckstützeinheit (3) ein eigenes, jeweils an dem Lagerschuh (32) der betreffenden Eckstützeinheit (3) angeordnetes Hydraulikaggregat (40) zugeordnet ist.

2. Landfahrzeug nach Anspruch 1, **dadurch gekennzeichnet, dass** das Stützbein (4) zwischen einer hochgeschwenkten Verstaustellung und einer im Wesentlichen vertikalen Betriebsstellung verschwenkbar ist.

3. Landfahrzeug nach Anspruch 2, **dadurch gekennzeichnet, dass** der Lagesicherung des Stützbeins (4) in seiner Verstaustellung dienende Sicherungsmittel (43) vorgesehen sind.

4. Landfahrzeug nach Anspruch 3, **dadurch gekennzeichnet**, die Sicherungsmittel (43) an dem einen Stützfuß (12) tragenden Rohrabschnitt des Stützbeins (4) angreifen.

5. Landfahrzeug nach einem der Ansprüche 1 bis 4, **dadurch gekennzeichnet, dass** ein Schwenkantrieb (8) in Form eines Hydraulikzylinders (9) vorgesehen ist.

6. Landfahrzeug nach Anspruch 5, **dadurch gekennzeichnet, dass** der Hydraulikzylinder (9) des Schwenkantriebs (8) an dem Lagerschuh (32) sowie an dem in dem Lagerschuh (32) verschwenkbar gelagerten Rohrabschnitt (5) des Stützbeines (4) oder einem hiermit starr verbundenen Teil angelenkt ist.

7. Landfahrzeug nach Anspruch 5 oder Anspruch 6, **dadurch gekennzeichnet, dass** der im Inneren des Stützbeins (4) angeordnete Hydraulikzylinder (19) und der Hydraulikzylinder (9) des Schwenkantriebs (8) durch das gleiche Hydraulikaggregat (40) beaufschlagt werden.

8. Landfahrzeug nach einem der Ansprüch1 1 bis 4, **dadurch gekennzeichnet**, der in dem Inneren des Stützbeins (4) angeordnete Hydraulikzylinder (19) auch die Verschwenkung des Stützbeins (4) bewirkt.

9. Landfahrzeug nach Anspruch 8, **dadurch gekennzeichnet, dass** eine Kulissenführung (33) vorgesehen ist, welche die Längenveränderung des Stützbeins (4) und dessen Verschwenken mechanisch miteinander koppelt.

10. Landfahrzeug nach Anspruch 9, **dadurch gekennzeichnet, dass** die Geometrie der Kulissenführung (33) so ausgeführt ist, dass beim Verlängern des Stützbeins (4) zu dessen Beginn bei einem vergleichsweise geringen Anteil des Hubes die Schwenkbewegung des Stützbeins (4) aus der Verstaustellung in die Betriebsstellung erfolgt.

11. Landfahrzeug nach einem der Ansprüche 1 bis 10, **dadurch gekennzeichnet, dass** endseitig an dem Stützbein (4) ein federnd gelagerter Stützfuß (12) angeordnet ist.

12. Landfahrzeug nach Anspruch 11, **dadurch gekennzeichnet, dass** der Stützfuß (12) einen schwenkbar, insbesondere einen kardanisch gelagerten Teller (13) umfasst.

13. Landfahrzeug nach einem der Ansprüche 1 bis 12, **dadurch gekennzeichnet, dass** die Rohrabschnitte (5, 6) des Stützbeines (4) einen runden Querschnitt aufweisen.

14. Landfahrzeug nach einem der Ansprüche 1 bis 12, **dadurch gekennzeichnet, dass** die Rohrabschnitte (5, 6) des Stützbeines (4) einen polygonalen Querschnitt aufweisen.

15. Landfahrzeug nach einem der Ansprüche 1 bis 14, **dadurch gekennzeichnet, dass** die Rohrabschnitte (5, 6) mittels Gleitlagerstücken (20) relativ zueinander geführt sind.

16. Landfahrzeug nach einem der Ansprüche 1 bis 15, **dadurch gekennzeichnet, dass** jede Eckstützeinheit (3) ein schlauchloses Hydrauliksystem aufweist, indem im Bereich der jeweiligen Schwenkachse (A) des betreffenden Stützbeines (4) eine hydraulische Drehkupplung (29) vorgesehen ist.

17. Landfahrzeug nach einem der Ansprüche 1 bis 16, **dadurch gekennzeichnet, dass** eine die Hydraulikaggregate (40) steuernde zentrale Steuer- und Regeleinheit mit einer Nivellierelektronik vorgesehen ist.

18. Landfahrzeug nach einem der Ansprüche 1 bis 17, **dadurch gekennzeichnet, dass** ein externer hydraulischer Druckspeicher vorgesehen ist.

## Claims

1. A land vehicle (1) with a chassis (2) and a plurality of corner support units (3) attached thereto, wherein:
each of the corner support units (3) has a support leg (4), which is mounted in a bearing shoe (32) attached rigidly to the land vehicle (1) so as to swivel around a substantially horizontal axis (A);
a length of the support leg (4) can be varied telescopically;
the support leg (4) comprises at least two tubular portions (5, 6) that can be displaced relative to one another in a longitudinal direction (X) of the support leg;
a hydraulic cylinder (19), by means of which the position of the at least two tubular portions (5, 6) relative to one another and thus the length of the support leg (4) can be changed, is disposed in an interior of the support leg (4);
**characterized in that**
each corner support unit (3) is assigned a hydraulic aggregate (40) of its own, respectively disposed on the bearing shoe (32) of the corner support unit (3) in question.

2. The land vehicle of claim 1, wherein the support leg (4) can be swiveled between a raised storage position and a substantially vertical operating position.

3. The land vehicle of claim 2, wherein securing means (43) are provided, which function to stabilize an orientation of the support leg (4) in its storage position.

4. The land vehicle of claim 3, wherein the securing means (43) engage with the tubular portion of the support leg (4) carrying a support foot (12).

5. The land vehicle of one of claims 1 to 4, wherein a swiveling drive (8) is provided in the form of a hydraulic cylinder (9).

6. The land vehicle of claim 5, wherein the hydraulic cylinder (9) of the swiveling drive (8) is linked to the bearing shoe (32) as well as to the tubular portion (5) of the support leg (4) that is mounted to swivel in the bearing shoe (32), or to a part rigidly connected thereto.

7. The land vehicle of claim 5 or claim 6, wherein the hydraulic cylinder (19) disposed in the interior of the support leg (4) and the hydraulic cylinder (9) of the swiveling drive (8) are pressurized by the same hydraulic aggregate (40).

8. The land vehicle of one of claims 1 to 4, wherein the hydraulic cylinder (19) disposed in the interior of the support leg (4) also causes swiveling of the support leg (4).

9. The land vehicle of claim 8, wherein a sliding block guide (33) is provided, which couples the length variation and the swiveling of the support leg (4) mechanically with one another.

10. The land vehicle of claim 9, wherein the geometry of the sliding block guide (33) is configured in such a way that, during lengthening of the support leg (4), the swiveling movement of the support leg (4) from the storage position into the operating position takes place during a relatively small fraction of a stroke length at the beginning.

11. The land vehicle of one of claims 1 to 10, wherein a spring-mounted support foot (12) is disposed at the end face on the support leg (4).

12. The land vehicle of claim 11, wherein the support foot (12) comprises a swivelable plate (13), especially mounted via a universal joint.

13. The land vehicle of one of claims 1 to 12, wherein the tubular portions (5, 6) of the support leg (4) have a round cross section.

14. The land vehicle of one of claims 1 to 12, wherein the tubular portions (5, 6) of the support leg (4) have a polygonal cross section.

15. The land vehicle of one of claims 1 to 14, wherein the tubular portions (5, 6) are guided relative to one another by means of sliding bearing pieces (20).

16. The land vehicle of one of claims 1 to 15, wherein each corner support unit (3) has a tubeless hydraulic system, wherein a hydraulic rotating coupling (29) is provided in a region of the respective swiveling axis (A) of the support leg (4) in question.

17. The land vehicle of one of claims 1 to 16, wherein a central control and regulating unit with an electronic leveling unit is provided to control the hydraulic aggregates (40).

18. The land vehicle of one of claims 1 to 17, wherein an external hydraulic pressure accumulator is provided.

## Revendications

1. Véhicule agricole (1) doté d'un châssis (2) et d'une pluralité d'unités de soutien d'angles (3) installée dessus, présentant les caractéristiques suivantes :
chacune des unités de soutien d'angles (3) présente une jambe d'appui (4) qui s'appuie de manière à être pivotable dans un patin d'appui (32) disposé fixement au niveau du véhicule agricole (1) autour d'un axe sensiblement horizontal (A) ;
la longueur de la jambe d'appui (4) est modifiable par système télescopique ;
la jambe d'appui (4) comprend au moins deux sections tubulaires (5, 6) déplaçables l'une par rapport à l'autre dans le sens longitudinal (X) de la jambe d'appui ;
à l'intérieur de la jambe d'appui (4), est disposé un vérin hydraulique (19) au moyen duquel la position relative des au moins deux sections tubulaires (5, 6) l'une par rapport à l'autre et ainsi la longueur de la jambe d'appui (4) peuvent être modifiées ;
**caractérisé en ce**
**qu'**à chaque unité de soutien d'angles (3) est associé un agrégat hydraulique (40) disposé respectivement au niveau du patin d'appui (32) de l'unité de soutien d'angles concernée (3).

2. Véhicule agricole selon la revendication 1, **caractérisé en ce que** la jambe d'appui (4) est pivotable entre une position de rangement pivotée vers le haut et une position de fonctionnement sensiblement verticale.

3. Véhicule agricole selon la revendication 2, **caractérisé en ce que** des moyens de blocage (43) servant à bloquer la position de la jambe d'appui (4) dans sa position de rangement sont prévus.

4. Véhicule agricole selon la revendication 3, **caractérisé en ce que** les moyens de blocage (43) empiètent sur une section tubulaire supportant un pied d'appui (12) de la jambe d'appui (4).

5. Véhicule agricole selon une des revendications 1 à 4, **caractérisé en ce qu'**il est prévu une commande pivotante (8) sous la forme d'un vérin hydraulique (9) .

6. Véhicule agricole selon la revendication 5, **caractérisé en ce que** le vérin hydraulique (9) de la commande pivotante (8) est articulé au patin d'appui (32) et à la section tubulaire (5) s'appuyant de manière pivotable dans le patin d'appui (32) de la jambe d'appui (4) ou à une pièce qui lui est raccordée fixement.

7. Véhicule agricole selon la revendication 5 ou la revendication 6, **caractérisé en ce que** le vérin hydraulique (19) disposé à l'intérieur de la jambe d'appui (4) et le vérin hydraulique (9) de la commande pivotante (8) sont sollicités par le même agrégat hydraulique (4).

8. Véhicule agricole selon une des revendications 1 à 4, **caractérisé en ce que** le vérin hydraulique (19) disposé à l'intérieur de la jambe d'appui (4) provoque aussi le pivotement de la jambe d'appui (4)

9. Véhicule agricole selon la revendication 8, **caractérisé en ce qu'**il est prévu un guide à coulisse (33) qui couple mécaniquement entre eux la rallonge de longueur de la jambe d'appui (4) et son pivotement.

10. Véhicule agricole selon la revendication 9, **caractérisé en ce que** la géométrie du guide à coulisse (33) est réalisée de manière à ce que, en cas de rallongement de la jambe d'appui (4) à son début, à une partie relativement réduite de la course, le mouvement de pivotement de la jambe d'appui (4) se fait de la position de rangement vers la position de fonctionnement.

11. Véhicule agricole selon une des revendications 1 à 10, **caractérisé en ce qu'**un pied d'appui (12) s'appuyant élastiquement est disposé au niveau de l'extrémité de la jambe d'appui (4) .

12. Véhicule agricole selon la revendication 11, **caractérisé en ce que** le pied d'appui (12) comprend un plateau (13) s'appuyant de manière pivotable, en particulier par un cardan.

13. Véhicule agricole selon une des revendications 1 à 12, **caractérisé en ce que** les sections tubulaires (5, 6) de la jambe d'appui (4) présentent une section transversale ronde.

14. Véhicule agricole selon une des revendications 1 à 12, **caractérisé en ce que** les sections tubulaires (5, 6) de la jambe d'appui (4) présentent une section transversale polygonale.

15. Véhicule agricole selon une des revendications 1 à 14, **caractérisé en ce que** les sections tubulaires (5, 6) sont guidées l'une par rapport à l'autre au moyen de pièces de palier coulissant (20).

16. Véhicule agricole selon une des revendications 1 à 15, **caractérisé en ce que** chaque unité de soutien d'angles (3) présente un système hydraulique sans tuyau du fait que, au niveau de l'axe de pivotement respectif (A) de la jambe d'appui concernée (4), un couplage rotatif hydraulique (29) est prévu.

17. Véhicule agricole selon une des revendications 1 à 16, **caractérisé en ce qu'**une unité centrale de commande et de réglage commandant les agrégats hydrauliques (40) et dotée d'un système électronique de nivelage est prévu.

18. Véhicule agricole selon une des revendications 1 à 17, **caractérisé en ce qu'**un accumulateur externe de pression hydraulique est prévu.
